# EUROPÄISCHE PATENTSCHRIFT

(11) **EP 0 855 774 B1**
(45) Veröffentlichungstag und Bekanntmachung des Hinweises auf die Patenterteilung: **18.10.2000**
(21) Anmeldenummer: 97101163.0
(22) Anmeldetag: 25.01.1997
(51) Int. Cl.: H02G 3/06

(54) **Kabelführung**
Cable guide
Guide pour câble

(43) Veröffentlichungstag der Anmeldung: 29.07.1998
(73) Patentinhaber: Megaplast, S.A., 01470 Amurrio/Alava (ES)
(72) Erfinder: Garcia Gonzales, Jesus, 19004 Guadalagara (ES)
(74) Vertreter: Schirmer, Siegfried, Dipl.-Ing.

(56) Entgegenhaltungen:
- FR-A- 2 633 111
- US-A- 2 144 391

## Beschreibung

Die Erfindung betrifft eine Kabelführung, insbesondere zur räumlichen Anordnung in Elektroautos, hergestellt im Spritzgießverfahren aus Chemiewerkstoff, bestehend aus einem Basisteil mit zugeordnetem Deckelteil, wobei beide Teile äußere Begrenzungsabbiegungen aufweisen und das Deckelteil mit seinen Begrenzungsabbiegungen über die Begrenzungsabbiegungen des Basisteils festlegbar ist.

Durch FR-A-2 633 111 ist eine ähnliche Kabelführung bekannt.

Kabelführungen können in räumlicher Anordnung sehr kompliziert verlaufen und erfordern bei einer Herstellung aus Chemiewerkstoff sehr kostenintensive Werkzeuge.

Der Erfindung liegt die Aufgabe zugrunde, im Spritzgießverfahren aus Chemiewerkstoff Kabelführungen der aufgezeigten Gattung herzustellen, die gegenüber den bisher bekannten Ausführungen wesentlich kostengünstiger sind.

Diese Aufgabe wird erfindungsgemäß dadurch gelöst, daß das Basisteil und das Deckelteil jeweils in einer bzw. nahezu einer Ebene gespritzt sind und an den vorgebenen Umlenkstellen ein Filmscharnier angeordnet ist und damit die Einzelteile bis annähernd 90° verdrehbar sind. Zweckmäßigerweise laufen die Begrenzungsabbiegungen des Basisteils jeweils einseitig entgegengesetzt zum Filmscharnier abgeschrägt auf Null aus. In Ausgestaltung der Erfindung weist das Basisteil im Bereich des Auslaufens der Begrenzungsabbiegungen vom Filmscharnier aus bis zur Außenseite eine Breite auf, die der Höhe der Begrenzungsabbiegungen entspricht und damit nach der Verdrehung des Basisteils eine in gleicher Höhe fortlaufende Begrenzungsabbiegung gebildet ist. Bei einer bevorzugten Ausführung sind einem Filmscharnier des Basisteils drei Filmscharniere im Deckelteil zur Erreichung einer Abdeckung im verdrehten Zustand zugeordnet.

Ein Ausführungsbeispiel der Erfindung ist in der Zeichnung dargestellt und wird nachfolgend näher erläutert.

Es zeigen:
- Fig. 1: eine Draufsicht auf ein Basisteil;
- Fig. 2: eine Unteransicht eines zugeordneten Deckelteils;
- Fig. 3: eine Seitenansicht des Punktes A der Figur 1 nach einer Verdrehung um 90°;
- Fig. 4: eine Draufsicht auf Punkt A der Figur 1 nach einer Verdrehung um 90° und
- Fig. 5: einen Querschnitt durch ein Basisteil mit aufgesetztem Deckelteil.

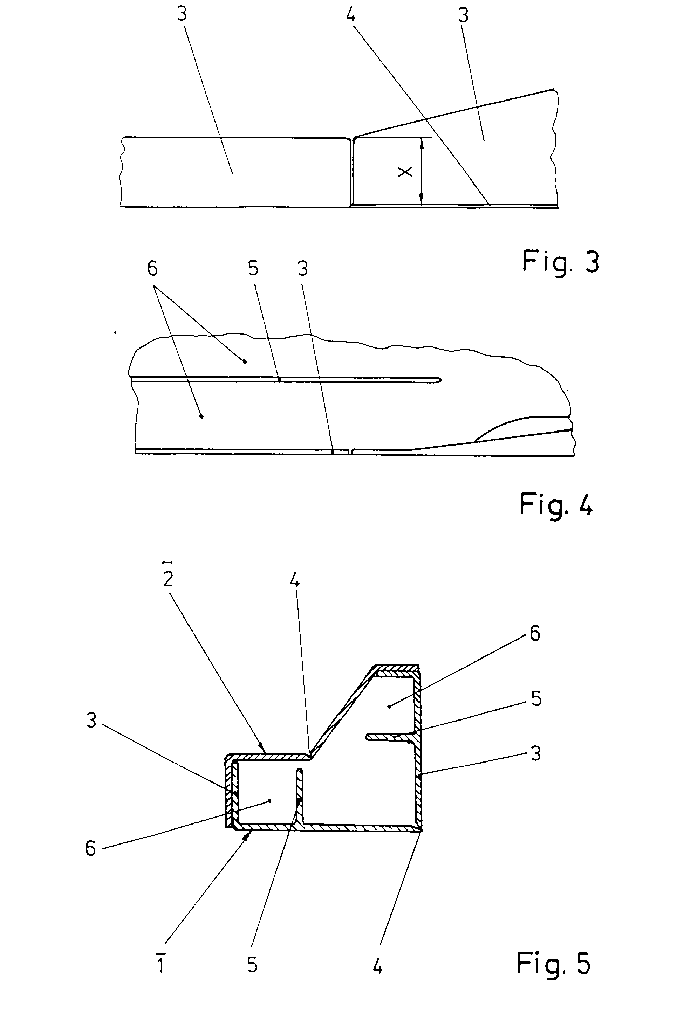

Die Kabelführung besteht aus einem Basisteil 1 und einem zugedordneten Deckelteil 2. Die Fixierung dieser beiden Teile 1; 2 zueinander erfolgt durch herkömmliche Mittel, z. B. durch eine Clipsanordnung. Sowohl das Basisteil 1, als auch das Deckelteil 2 besitzen äußere Begrenzungsabbiegungen 3, wobei die Begrenzungsabbiegungen 3 des Deckelteils 2 über die Begrenzungsabbiegungen 3 des Basisteils 1 geführt sind. Wie aus Figur 5 erkennbar, besitzt das Basisteil 1 zwischen den beiden Begrenzungsabbiegungen 3 zwei parallelverlaufende Stege 5 zur Bildung von insgesamt drei Einzelkabelführungskanälen 6.

Das Basisteil 1 weist ein Filmscharnier 4 auf. Nach der Entnahme des in nahezu einer Ebene gespritzten Basisteils 1 bzw. unmittelbar vor der Montage der Kabelführung kann über dieses Filmscharnier 4 die erforderliche Neigung durch Verdrehung der Einzelbereiche des Basisteils 1 hergestellt werden. Die Begrenzungsabbiegungen 3 des Basisteils 1 laufen jeweils einseitig entgegengesetzt zum Filmscharnier 4 abgeschrägt auf Null aus, wobei das Basisteil 1 im Bereich des Auslaufens der Begrenzungsabbiegungen 3 vom Filmscharnier 4 aus bis zur Außenseite eine Breite x aufweist, die der Höhe der Begrenzungsabbiegungen 3 entspricht und damit nach der Verdrehung des Basisteils 1 eine in gleicher Höhe fortlaufende Begrenzungsabbiegung 3 gebildet ist.

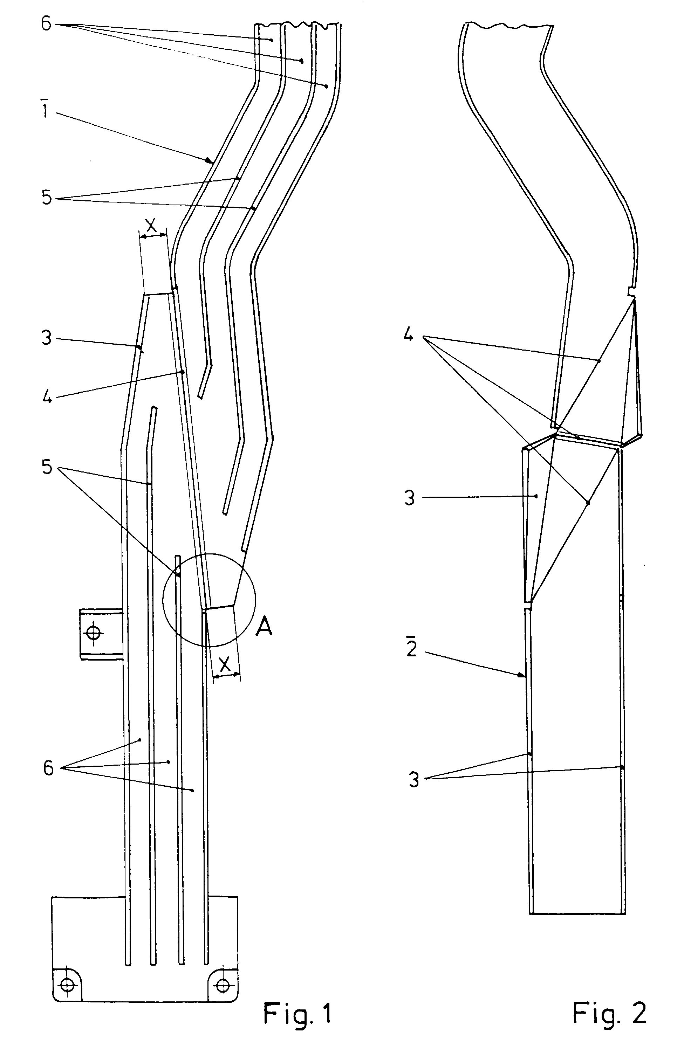

Wie aus Figur 2 erkennbar, weist das zum Basisteil 1 mit einem Filmscharnier 4 passende Deckelteil 2 drei Filmscharniere 4 auf, so daß damit im verdrehten Zustand eine passende Abdeckung zum Basisteil 1 gegeben ist.

### Aufstellung der Bezugszeichen:

- 1: Basisteil
- 2: Deckelteil
- 3: Begrenzungsabbiegung
- 4: Filmscharnier
- 5: Stege
- 6: Kabelführungskanal
- x: Breite

## Patentansprüche

1. Kabelführung, insbesondere zur räumlichen Anordnung in Elektroautos, hergestellt im Spritzgießverfahren aus Chemiewerkstoff, bestehend aus einem Basisteil (1) mit zugeordnetem Deckelteil (2), wobei beide Teile äußere Begrenzungsabbiegungen (3) aufweisen und das Deckelteil mit seinen Begrenzungsabbiegungen über die Begrenzungsabbiegungen des Basisteils festlegbar ist, dadurch gekennzeichnet, daß das Basisteil (1) und das Deckelteil (2) jeweils in einer bzw. nahezu einer Ebene gespritzt sind und an den vorgegebenen Umlenkstellen ein Filmscharnier (4) angeordnet ist und damit die Einzelteile (1; 2) bis annähernd 90° verdrehbar sind.

2. Kabelführung nach Anspruch 1, dadurch gekennzeichnet, daß die Begrenzungsabbiegungen (3) des Basisteils (1) jeweils einseitig entgegengesetzt zum Filmscharnier (4) abgeschrägt auf Null auslaufen.

3. Kabelführung nach Anspruch 1 oder 2, dadurch gekennzeichnet, daß das Basisteil (1) im Bereich des Auslaufens der Begrenzungsabbiegungen (3) vom Filmscharnier (4) aus bis zur Außenseite eine Breite (x) aufweist, die der Höhe der Begrenzungsabbiegungen (3) entspricht und damit nach der Verdrehung des Basisteils (1) eine in gleicher Höhe fortlaufende Begrenzungsabbiegung (3) gebildet ist.

4. Kabelführung nach einem der Ansprüche 1 bis 3, dadurch gekennzeichnet, daß einem Filmscharnier (4) des Basisteils (1) drei Filmscharniere (4) im Deckelteil (2) zur Erreichung einer Abdeckung im verdrehten Zustand zugeordnet sind.

## Claims

1. Cable guide, especially for spatial arrangement in electric automobiles, produced in injection-moulding process from chemical material, consisting of a base part (1) with associated cover part (2), wherein the two parts have outer bent-over boundary portions (3) and the cover part is fixable by its bent-over boundary portions over the bent-over boundary portions of the base part, characterised in that the base part (1) and the cover part (2) are each injection moulded in one or almost one plane and a film hinge (4) is arranged at the predetermined deflection locations and thus the individual parts (1; 2) are rotatable up to approximately 90°.

2. Cable guide according to claim 1, characterised in that the bent-over boundary portions (3) of the base part (1) each at one side oppositely to the film hinge (4) run out chamfered to zero.

3. Cable guide according to claim 1 or 2, characterised in that the base part (1) has in the region of the running out of the bent-over boundary portions (3) from the film hinge (4) up to the outer side a width (x) which corresponds to the height of the bent-over boundary portions (3) and thus after the rotation of the base part (1) a continuous bent-over boundary portion (3) at the same height is formed.

4. Cable guide according to one of claims 1 to 3, characterised in that associated with a film hinge (4) of the base part (1) are three film hinges (4) in the cover part for attainment of a cover in the rotated state.

## Revendications

1. Chemin de câble, en particulier pour des agencements dans l'espace des automobiles électriques, réalisé selon le procédé d'injection à partir de produits chimiques thermodurcissables, chemin de câble qui consiste en une partie de base (1) avec une partie formant couvercle correspondante (2), les deux parties présentant des déviations extérieures de délimitation (3) et la partie formant couvercle pouvant être fixée par ses déviations de délimitation sur les déviations de délimitation de la partie constituant la base,
caractérisé en ce que
la partie de base (1) et la partie formant le couvercle (2) sont injectées chacune dans un plan ou presque dans un plan, et que l'on dispose dans les endroits prédéfinis de changement de direction un film charnière (4) et que de cette façon on peut faire tourner les différentes parties (1, 2) jusqu'à environ 90°.

2. Chemin de câble selon la revendication 1,
caractérisé en ce que
les déviations de délimitation (3) de la partie de base (1) s'étendent respectivement d'un côté à l'opposé du film charnière (4) en étant biseautées jusqu'à zéro.

3. Chemin de câble selon la revendication 1 ou 2,
caractérisé en ce que
la partie de base (1) présente dans la zone de l'extension des déviations de délimitation (3) depuis le film charnière (4) jusqu'au côté extérieur une largeur (x), qui correspond à la hauteur des déviations de délimitation (3) et qu'il est formé de cette façon après la rotation de la partie de base (1) une déviation de délimitation continue (3) à la même hauteur.

4. Chemin de câble selon l'une des revendications 1 à 3,
caractérisé en ce que
l'on associe à un film charnière (4) de la partie de base (1) trois films charnières (4) dans la partie formant le couvercle (2) pour obtenir un recouvrement en position tournée.
